# EUROPÄISCHE PATENTSCHRIFT

(11) **EP 0 612 219 B1**
(45) Veröffentlichungstag und Bekanntmachung des Hinweises auf die Patenterteilung: **09.04.1997**
(21) Anmeldenummer: 92915079.5
(22) Anmeldetag: 15.07.1992
(51) Int. Cl.: A23B 7/10, A23B 7/157

(54) **WÄSSRIGE LÖSUNG UND VERFAHREN ZUM HALTBARMACHEN VON ROHGEMÜSE UND ROHGEMÜSEABFÄLLEN**
AQUEOUS SOLUTION AND CONSERVATION PROCESS FOR RAW VEGETABLES AND RAW VEGETABLE WASTE
SOLUTION AQUEUSE ET PROCEDE DE CONSERVATION DE LEGUMES CRUS ET DE DECHETS DE LEGUMES CRUS

(43) Veröffentlichungstag der Anmeldung: 31.08.1994
(73) Patentinhaber: SEIFFERT, Fritz, 59075 Hamm (DE)
(72) Erfinder: SEIFFERT, Fritz, 59075 Hamm (DE)
(74) Vertreter: Kayser, Reinhild
(86) Internationale Anmeldenummer: DE9200581
(87) Internationale Veröffentlichungsnummer: WO9402025

(56) Entgegenhaltungen:
- EP-A- 0 141 875
- FR-A- 731 991
- FR-A- 2 585 538
- PATENT ABSTRACTS OF JAPAN vol. 15, no. 64 (C-806)15. Februar 1991

## Beschreibung

Die Erfindung betrifft eine wäßrige Lösung zum Haltbarmachen von mechanisch vorbearbeitetem und gewaschenem Rohgemüse gemäß Oberbegriff des Anspruchs 1 sowie ein Verfahren zu deren Anwendung gemäß Oberbegriff des Anspruchs 6.

Bei der gewerblichen Herstellung von Mahlzeiten in Großküchen, Kantinen, Gaststätten, etc. wird in der Regel bereits andernorts kochfertig vorbearbeitetes Rohgemüse, wie z. B. Kartoffeln, Möhren, Sellerie, Lauch, Kohlrabi, Salat, Spinat o. dgl. verarbeitet. Aber auch der Einzelverbraucher, dem das Schälen, Schneiden oder Putzen von Rohgemüse zu zeitaufwendig ist, greift auf bereits kochfertig angebotenes Rohgemüse zurück.

Bei mechanisch vorbearbeitetem Rohgemüse, also z. B. geschälten Kartoffeln, geschnittenen Möhren, Kohlrabi oder geputztem Salat, tritt das Problem der geringen Haltbarkeit auf. Durch Wegfall einer äußeren Schutzschicht ist das vorbearbeitete Rohgemüse der Umgebungsluft ausgesetzt und verliert zunächst sein frisches Aussehen und seinen typischen Geschmack und beginnt dann bei längerer Lagerung schnell zu verderben.

In der Regel liegt zwischen der mechanischen Vorbearbeitung in einem Schälbetrieb o. dgl. und der Weiterverarbeitung in einer Großküche ein längerer Transportweg, der eine gewisse Lagerhaltung des mechanisch vorbearbeiteten Rohgemüses erforderlich macht.

Aus EP-O141875 ist ein Verfahren und eine Zusammensetzung zum Behandeln von eßbaren Produkten bekannt, in dem unter anderem Zitronensäure und Natriumcarbonat verwendet wird. Zusätzlich zu der Zitronensäure und dem Natriumcarbonat wird der Zusammensetzung regelmäßig ein Natriumbisulfid in größeren Mengen zugesetzt.

Eine aus den vorstehend genannten Druckschriften bekannte Schwefelbehandlung kann aber nur in sehr geringem Umfang durchgeführt werden, da Schwefel an sich gesundheitsschädlich ist und deswegen schon aufgrund lebensmittelrechtlicher Bestimmungen nur in geringem Maße eingesetzt werden darf.

Ferner bildet sich an der Oberfläche des mechanisch vorbearbeiten und mit Schwefel behandelten Rohgemüses ein dünner Schwefelfilm, der den Stoffaustausch zwischen Rohgemüse und Umgebung beeinträchtigt. Das hat zur Folge, daß das Rohgemüse bei längerer Lagerung austrocknet und durch Garen oder Kochen eine in sich unterschiedliche Konsistenz erlangt. So wird z. B. eine mit Schwefel behandelte Kartoffel durch Garung außen hart und innen weich.

Die bei der mechanischen Vorbearbeitung des Rohgemüses anfallenden Rohgemüseabfälle sind ebenfalls nur von geringer Haltbarkeit. Eine längere Lagerung ist nicht möglich, da die Verderbnis schnell einsetzt und sich durch unangenehmen Abfallgeruch bemerkbar macht. Auch bei den Rohgemüseabfällen ist eine übermäßige Behandlung mit Schwefel nicht möglich, da diese Abfälle zu Futtermittel weiterverarbeitet oder zur Direktverfütterung abgeholt werden. Der im Futtermittel angereicherte Schwefel wurde somit über die Nahrungskette indirekt, durch den Verzehr von tierischen Nahrungsmitteln, an den Menschen weitergegeben.

Aufgabe der Erfindung ist daher, eine wäßrige Lösung sowie ein Verfahren zu deren Anwendung zu schaffen, mit der/dem eine längere Lagerhaltung von mechanisch vorbearbeitetem Rohgemüse und der damit anfallenden Abfälle ohne Gesundheitsgefährdung möglich wird.

Die Aufgabe wird gemäß Anspruch 1 durch eine wäßrige Lösung gelöst, die dadurch gekennzeichnet ist, daß Natriumhydrogencarbonat und/oder Natriumcarbonat, Zitronensäure und zumindest ein Element aus der Gruppe der Alkali- und Erdalkalimetalle in einem Mischungsverhältnis von 3 - 5 : 1,5 - 2,5 : 0,5 - 1,5 vorliegen.

Die Aufgabe wird ferner durch ein Verfahren gemäß Anspruch 6 gelöst, das dadurch gekennzeichnet ist, daß das Rohgemüse nach dem Waschen mit einer wäßrigen Lösung nach einem der Ansprüche 1 - 3 behandelt wird und nach der Behandlung verpackt wird.

Die erfindungsgemäße wäßrige Lösung sowie das Verfahren zu deren Anwendung führen dazu, daß nach einer verfahrensmäßigen Behandlung die Haltbarkeit unterschiedlichster Rohgemüsearten, d. h. Kartoffeln, Möhren, Sellerie, Lauch, Kohlrabi, Salat, Spinat o. dgl. auf bis zu 8 Monate ausgedehnt werden kann. Dabei sind keine Veränderungen des mechanisch verarbeiteten Rohgemüses feststellbar, insbesondere bleiben Aussehen und Geschmack sowie dessen Konsistenz über die gesamte Zeit gleichbleibend frisch.

In einer weiteren vorteilhaften Ausgestaltung der Erfindung ist vorgesehen, daß der Anteil der Bestandteile 0,01 - 0,5 Gew.% der wäßrigen Lösung beträgt.

In einer weiteren vorteilhaften Ausgestaltung der Erfindung ist vorgesehen, daß zumindest eines der Elemente Magnesium, Kalium und/oder Calcium als Bestandteil vorliegt.

Eine weitere vorteilhafte Ausgestaltung der Erfindung sieht vor, daß der wäßrigen Lösung gemäß Anspruch 1 ein Gemisch aus Calcium und Magnesium im Verhältnis von 65 : 35 - 55 : 45 beigefügt ist.

Zusätzlich ist als vorteilhafte Ausgestaltung der Erfindung vorgesehen, daß die Bestandteile Natriumhydrogencarbonat und/oder Natriumcarbonat, Zitronensäure und zumindest ein Element aus der Gruppe der Alkali- und Erdalkalimetalle 0,5 - 2,5 Gew.% der wäßrigen Lösung ausmachen.

In einer weiteren vorteilhaften Ausgestaltung des erfindungsgemäßen Verfahrens ist vorgesehen, daß das Rohgemüse nach der Behandlung vakuumverpackt wird.

In einer weiteren Ausgestaltung ist vorgesehen, daß den Rohgemüseabfällen ein Gemisch aus Calcium und Magnesium in einem Mischungsverhältnis von 65 : 35 - 55 : 45 zugeführt wird, und daß die Rohgemüseabfälle anschließend mit der vorstehend beschriebenen wäßrigen Lösung behandelt werden.

Besonders günstig hat sich erwiesen, daß die Behandlungsdauer etwa 30 - 200 Sekunden beträgt.

Dazu hat es sich ebenfalls als besonders günstig erwiesen, daß als Verpackung eine Folie verwendet wird, die eine Dicke von 100 - 130 µm (µ) und eine Durchlässigkeit von 10 - 20 cm³/m² aufweist.

Die Erfindung ist nachstehend anhand der Beispiele näher beschrieben.:

### Beispiel 1: Kartoffeln/Messerschälung

Es werden festkochende rohe Kartoffeln durch Messerschälung von ihrer Außenschale getrennt und gewaschen. Durch die Messerschälung werden die unter der Schale sitzenden Stärkezellen nur geringfügig verletzt, so daß eine glatte Struktur vorliegt, die eine gewisse Diffusion an der äußeren Membran der Stärkezellen zuläßt.

Ferner wird eine wäßrige Lösung hergestellt, die Natriumhydrogencarbonat und/oder Natriumcarbonat, Zitronensäure und Mineralstoffe (Mg, K, Ca) als Bestandteile in einem Mischungsverhältnis von etwa 4 : 2 : 1 enthält, wobei die Menge der Bestandteile insgesamt etwa 0,10 Gew.% der wäßrigen Lösung beträgt.

Die frisch geschälten und gewaschenen Kartoffeln werden für etwa 60 - 140 Sekunden in die wäßrige Lösung gegeben. Danach werden die Kartoffeln tropffrei in einer Folie verpackt, die eine Dicke von etwa 120 µm (µ) und eine Durchlässigkeit von etwa 15 cm³/m² aufweist und anschließend vakuumiert.

Die Haltbarkeitsdauer der derartig behandelten Kartoffeln beträgt etwa 45 Tage.

Eine Verarbeitung gleichartiger Kartoffeln ohne eine Behandlung mit der erfindungsgemäßen wäßrigen Lösung führt bereits nach 5 Tagen zu einer graugrünen Verfärbung mit abweichender Geruchsentwicklung.

### Beispiel 2: Kartoffeln/Messerschälung

Es werden festkochende rohe Kartoffeln durch Messerschälung von ihrer Außenschale getrennt, in Stäbchen und Scheiben geschnitten und gewaschen.

Ferner wird eine wäßrige Lösung hergestellt, die Natriumhydrogencarbonat und/oder Natriumcarbonat, Zitronensäure und Mineralstoffe (Mg, K, Ca) als Bestandteile in einem Mischungsverhältnis von etwa 4 : 2 : 1 enthält, wobei die Menge der Bestandteile insgesamt etwa 0,25 Gew.% der wäßrigen Lösung beträgt.

Die frisch geschälten und gewaschenen Kartoffelstäbchen oder -scheiben werden für etwa 60 - 140 Sekunden in die wäßrige Lösung gegeben. Danach wird die Kartoffel tropffrei in einer Folie verpackt, die eine Dicke von etwa 120 µ und eine Durchlässigkeit von etwa 15 cm³/m² aufweist.

Die Kartoffelstäbchen oder -scheiben haben bei vakuumierter Verpackung eine Haltbarkeit von 45 Tagen, bei luftgezogener Verpackung eine Haltbarkeit von 15 Tagen und bei loser Verpackung eine Haltbarkeit von 10 Tagen.

Die Verarbeitung der gleichen Kartoffeln beziehungsweise Kartoffelstücken, -scheiben oder -stäbchen ohne Behandlung mit der erfindungsgemäßen Lösung führt dazu, daß diese, vakuumverpackt, bereits nach 5-tägiger Lagerung eine graugrüne Verfärbung und eine abweichende Geruchsentwicklung aufweisen.

### Beispiel 3: Kartoffel/Karbonrundschälung

Es werden mehligkochende rohe Kartoffeln durch Karbonrundschälung von ihrer Außenschale getrennt. Einige Kartoffeln werden in Stücke, andere in Stäbchen oder Scheiben geschnitten.

Durch die Karbonrundschälung wird die Außenschale der Kartoffel gleichsam "weggerubbelt", wodurch die Membran der unter der Schale liegenden Stärkezellen in Mitleidenschaft gezogen wird. Mikroskopisch lassen sich Rillen und Furchen feststellen. Durch die größere Oberfläche nimmt die Diffusion an der äußeren Membran zu.

Daher wird eine wäßrige Lösung hergestellt, die Natriumhydrogencarbonat und/oder Natriumcarbonat, Zitronensäure und Mineralstoffe (Mg, K, Ca) als Bestandteile in einem Mischungsverhältnis von etwa 4 : 2 : 1 enthält, wobei die Menge der Bestandteile insgesamt etwa 0,30 Gew.% der wäßrigen Lösung beträgt. Die frisch geschälten, z. T. geschnittenen und gewaschenen Kartoffeln werden für etwa 60 - 140 Sekunden in die wäßrige Lösung gegeben. Danach werden die Kartoffeln bzw. Kartoffelstücke, -stäbchen und -scheiben tropffrei in einer Folie gemäß Beispiel 1 oder 2 verpackt.

Die Haltbarkeitsdauer bei vakuumierter Verpackung beträgt für die Kartoffeln 45 Tage, bei luftgezogener Verpackung 15 Tage und bei loser Verpackung 10 Tage.

Bei einer Verarbeitung der Kartoffel, der Kartoffelstücke, -stäbchen oder -scheiben ohne Behandlung mit der erfindungsgemäßen Lösung tritt, vakuumverpackt, bereits nach 5-tägiger Lagerung eine graugrüne Verfärbung und eine abweichende Geruchsentwicklung an der Kartoffel auf.

### Beispiel 4: Knollengemüse

Es werden einheimische Gemüsesorten, wie Möhren, Sellerie, Lauch, Kohlrabi o. dgl., mechanisch vorbearbeitet, d. h. geschält, geschnitten, geputzt und gewaschen.

Ferner wird eine wäßrige Lösung hergestellt, die Natriumhydrogencarbonat und/oder Natriumcarbonat, Zitronensäure und Mineralstoffe (Mg, K, Ca) als Bestandteile in einem Mischungsverhältnis von etwa 4 : 2 : 1 enthält, wobei die Menge der Bestandteile insgesamt etwa 0,03 - 0,07 Gew.% der wäßrigen Lösung beträgt.

Das frisch vorbearbeitete Gemüse wird etwa 80 - 160 Sekunden in die wäßrige Lösung gegeben. Anschließend wird das Gemüse tropffrei in eine Folie gemäß Beispiel 1 oder 2 verpackt und vakuumiert.

Die Haltbarkeitsdauer bei vakuummierter Verpackung für das Gemüse beträgt je nach Gemüsesorte zwischen 5 und 8 Monaten.

### Beispiel 5: Blattgemüse

Es werden Salate geschnitten, geputzt und gewaschen und dann für 60 - 80 Sekunden in eine wäßrige Lösung gegeben, die Natriumhydrogencarbonat und/oder Natriumcarbonat, Zitronensäure und Mineralstoffe (Mg, K, Ca) als Bestandteile in einem Mischungsverhältnis von etwa 4 : 2 : 1 enthält. Die Menge der Bestandteile beträgt etwa 0,03 - 0,05 Gew.% der wäßrigen Lösung.

Anschließend wird der Salat tropffrei lose oder luftgezogen verpackt. Die Haltbarkeitsdauer beträgt in beiden Fällen etwa 8 Tage.

In den Beispielen 1 - 5 beträgt die Lagerungstemperatur etwa 4 - 8° Celsius, was der normalen Kühlschrank- bzw. Kühlhaustemperatur entspricht.

Aus den Beispielen 1 - 5 geht hervor, daß die erfindungsgemäße wäßrige Lösung sowie das Verfahren zu deren Anwendung bei vorbearbeitetem Rohgemüse in ihrer Zusammensetzung so ausgelegt ist, daß eine Behandlung des Rohgemüses mit der erfindungsgemäßen wäßrigen Lösung die Diffusion an der außenliegenden Membran der Zelle beschleunigt und einen stabilen osmotischen Druck in den zum Teil freiliegenden Zellen des vorbearbeiteten Rohgemüses erzeugt.

Da nach bisheriger Erfahrung ein Zusammenhang zwischen Natriumhydrogencarbonat und/oder Natriumcarbonat und der Frischhaltung von Rohgemüse nicht bekannt ist, wurde das Rohgemüse und auch die erfindungsgemäße wäßrige Lösung auf die Substanzen Sulfit, Ascorbinsäure und Hydrogencarbonat untersucht, ohne daß diese Stoffe jedoch nachgewiesen werden konnten. Auch sensorische und bakteriologische Untersuchungen des Rohgemüses wiesen keine signifikanten Abweichungen auf.

Zur Herstellung der erfindungsgemäßen Lösung bietet sich an, zunächst ein pulverförmiges Gemisch aus Natriumhydrogencarbonat, Zitronensäure und Mineralstoffen, d.h. zumindest einem Element aus der Gruppe der Erdalkali- und Alkalimetalle, insbesondere Magnesium, Calcium und/oder Kalium, und vorzugsweise Calcium in einem Mischungsverhältnis von etwa vier Teilen Natriumhydrogencarbonat, etwa zwei Teilen Zitronensäure und etwa einem Teil Mineralstoffe herzustellen. Das so erhaltene Gemisch ist dann in destilliertes Wasser zu geben, so daß die in den Beispielen und den Ansprüchen angegebenen prozentualen Gewichtsanteile an der Gesamtlösung erreicht werden.

Das Natriumhydrogencarbonat wird im destillierten Wasser zu Natriumcarbonat umgewandelt und liegt dann im wesentlichen als solches in der erfindungsgemäßen wäßrigen Lösung vor.

Es ist zudem möglich zunächst ein Konzentrat der wäßrigen Lösung anzufertigen, z.B. mit einem Anteil des vorstehend beschriebenen Gemisches an der Gesamtlösung von etwa 50 Gew.%, so daß dann die für ein beliebiges Rohgemüse geeignete Verdünnung leicht hergestellt werden kann.

Die Behandlung des jeweiligen Rohgemüses mit der wäßrigen Lösung erfolgt dann derart, daß das vorbearbeitete Rohgemüse in die entsprechende wäßrige Lösung gegeben wird und dort über die Behandlungszeit verbleibt. Neben dieser Möglichkeit, die Behandlung in Form eines Tauchbades durchzuführen, ist es aber auch denkbar, das vorbearbeitete Rohgemüse in einem Sprühbad zu behandeln.

Als Mineralstoffe werden die Salze der Erdalkali- bzw. Alkalimetalle Magnesium, Calcium und Kalium herangezogen, da zum einen Magnesium und Kalium in größeren Mengen im Rohgemüse auftreten, d. h. auch in größeren Mengen diffundieren und somit wieder zugeführt werden müssen, und zum anderen Calcium die Verdunstung von Wasser verzögert und zudem dazu beiträgt, die wäßrige Lösung im neutralen pH-Wert-Bereich zu halten.

Es ist durchaus möglich, diese Minerale unter den oben genannten Gesichtspunkten zu mischen oder einzeln zu verwenden. Auf jeden Fall ist zu beachten, daß Calcium neben den oben genannten Wirkungen zudem auch für den menschlichen Körper und dessen Aufbau von großer Wichtigkeit ist.

Die in den Beispielen angegebenen Mischungsverhältnisse sind Mittelwerte. In Versuchen wurden mit anderen Mischungsverhältnissen, die im Rahmen der in den Ansprüchen angegebenen Bereiche liegen, ebenfalls brauchbare Erfolge bei der Verlängerung der Haltbarkeit von vorbearbeitetem Rohgemüse erzielt.

Die Haltbarmachung der bei der Vorbearbeitung des Rohgemüses anfallenden Rohgemüseabfälle wird nachstehend anhand des Beispiels näher beschrieben:

### Beispiel 6: Rohgemüseabfall

Nach dem Waschen und Schälen des Rohgemüses wird das verwendete Wasser zurückgeführt und die relativ trockenen Schälabfälle des Rohgemüses in einem geeigneten Behältnis aufgefangen. Anschließend wird über den Rohgemüseabfall Calcium und Magnesium in einem Mischungsverhältnis von etwa 60 : 40 gestreut.

Ferner wird eine wäßrige Lösung hergestellt, die Natriumhydrogencarbonat oder Natriumcarbonat, Zitronensäure und Mineralstoffe (Mg, K, Ca) als Bestandteile in einem Mischungsverhältnis von etwa 4 : 2 : 1 enthält, wobei die Menge der Bestandteile insgesamt etwa 1 - 2 Gew.% der wäßrigen Lösung beträgt.

Die wäßrige Lösung wird so auf die Rohgemüseabfälle gegeben, daß diese die Rohgemüseabfälle gerade durchdringen kann. Abschließend wird der Rohgemüseabfall mittels eines geeigneten Rührwerks verquirlt und in einem kühlen Raum bei maximal 20°C abgestellt.

Die Haltbarkeit der erfindungsgemäß behandelten Rohgemüseabfälle beträgt etwa 8 Tage. Erst nach diesem Zeitpunkt beginnt ein Zersetzungsprozeß, der durch einen abweichenden Geruch leicht feststellbar wird.

Bei Rohgemüseabfällen, die ohne Behandlung mit der erfindungsgemäßen wäßrigen Lösung und dem Zusatz aus Calcium und Magnesium in einem Behältnis aufgefangen und aufbewahrt werden, tritt ein Zersetzungsprozeß bereits schon nach wenigen Stunden ein.

Die im Beispiel 6 beschriebenen Rohgemüseabfälle sind trotz Wasserabführung noch relativ feucht. Aus diesem Grund muß neben einer Behandlung mit der erfindungsgemäßen wäßrigen Lösung, ein Gemisch aus Magnesium und Calcium zugesetzt werden, da sowohl Magnesium als auch Calcium Wasser an sich binden können und Calcium darüberhinaus noch die Verdunstung von Wasser vehindert. Durch die Bindung des Wassers wird der Rohgemüseabfall in kurzer Zeit deutlich trockener und dickbreiiger. Dies ist erwünscht, da die Abfälle später zu Futtermittel weiterverarbeitet oder zur Direktvefütterung abgeholt werden sollen. Aus diesem Grunde kann der Rohgemüseabfall aber nur soweit mit der erfindungsgemäßen wäßrigen Lösung behandelt werden, daß diese den Rohgemüseabfall gerade durchdringt. Die verdunstungshemmende Eigenschaft des beigestreuten Calciums sorgt dennoch dafür, daß der gewünschte Erfolg - das Erreichen einer längeren Haltbarkeit und damit längeren Lagerfähigkeit erreicht wird.

## Patentansprüche

1. Wäßrige Lösung zum Haltbarmachen von mechanisch vorbearbeitetem und gewaschenem Rohgemüse enthaltend als Bestandteile Natriumhydrogencarbonat und/oder Natriumcarbonat, Zitronensäure und zumindest ein Element aus der Gruppe der Alkali- und Erdalkimetalle,
**dadurch gekennzeichnet,**
daß das Natriumhydrogencarbonat und/oder Natriumcarbonat, die Zitronensäure und das zumindest ein Element aus der Gruppe der Alkali- und Erdalkalimetalle in einem Mischungsverhältnis von 3-5 : 1,5-2,5 : 0,5-1,5 vorliegen.

2. Wäßrige Lösung nach Anspruch 1,
**dadurch gekennzeichnet,**
daß der Anteil der Bestandteile 0,01 - 0,5 Gew.% der wäßrigen Lösung beträgt.

3. Wäßrige Lösung nach Anspruch 1 oder 2
**dadurch gekennzeichnet,**
daß das zumindest ein Element aus der Gruppe der Alkali- und Erdalkalimetalle Magnesium, Kalium und/oder Calcium ist.

4. Wäßrige Lösung nach Anspruch 1,
**dadurch gekennzeichnet,**
daß zusätzlich ein Gemisch aus Calcium und Magnesium im Mischungsverhältnis von 65 : 35 - 55 : 45 enthalten ist.

5. Wäßrige Lösung nach Anspruch 4,
**dadurch gekennzeichnet,**
daß der Anteil der Bestandteile Natriumhydrogencarbonat und/oder Natriumcarbonat, Zitronensäure und zumindest ein Element aus der Gruppe der Alkali- und Erdalkalimetalle 0,5 - 2,5 Gew.% der wäßrigen Lösung beträgt.

6. Verfahren zum Haltbarmachen von mechanisch vorbearbeitetem und gewaschenem Rohgemüse,
**dadurch gekennzeichnet,**
daß das Rohgemüse nach dem Waschen mit einer wäßrigen Lösung nach einem der Ansprüche 1 - 3 behandelt wird und nach der Behandlung verpackt wird.

7. Verfahren nach Anspruch 6,
**dadurch gekennzeichnet,**
daß das Rohgemüse nach der Behandlung vakuumverpackt wird.

8. Verfahren zum Haltbarmachen von Rohgemüseabfällen,
**dadurch gekennzeichnet,**
daß den Rohgemüseabfällen ein Gemisch aus Calcium und Magnesium in einem Mischungsverhältnis von 65 : 35 - 55 : 45 zugeführt wird, daß anschließend die Rohgemüseabfälle mit einer wäßrigen Lösung nach einem der Ansprüche 1, 4 oder 5 behandelt werden.

9. Verfahren nach einem der Ansprüche 6 - 8,
**dadurch gekennzeichnet,**
daß die Behandlungsdauer etwa 30 - 200 Sekunden beträgt.

10. Verfahren nach Anspruch 7,
**dadurch gekennzeichnet,**
daß als Verpackung eine Folie mit einer Dicke von 100 - 130 µm (µ) und einer Durchlässigkeit von 10 - 20 cm³/m² verwendet wird.

## Claims

1. Aqueous solution for preserving mechanically pre-processed and washed raw vegetables and which contains sodium hydrogen carbonate and/or sodium carbonate, citric acid and at least one element from the group of alkali metals and alkaline earth metals,
characterised in that the sodium hydrogen carbonate and/or sodium carbonate, the citric acid and the at least one element from the group of alkali metals and alkaline earth metals are present in a mixing ratio of 3-5 : 1.5-2.5 : 0.5-1.5

2. Aqueous solution according to claim 1,
characterised in that the proportion of the components is 0.01 - 0.5 percent in weight of the aqueous solution.

3. Aqueous solution according to claim 1 or 2,
characterised in that the at least one element is from the group of alkali metals and alkaline earth metals magnesium, potassium and/or calcium.

4. Aqueous solution according to claim 1,
characterised in that in addition a mixture of calcium and magnesium is included in a mixing ratio of 65 : 35 - 55 : 45.

5. Aqueous solution according to claim 4,
characterised in that the proportion of the components sodium hydrogen carbonate and/or sodium carbonate, citric acid and at least one element from the group of alkali metals and alkaline earth metals is 0.5 - 2.5 percent in weight of the aqueous solution.

6. Process for preserving mechanically pre-processed and washed raw vegetables,
characterised in that after washing the raw vegetables are treated with an aqueous solution according to one of claims 1 - 3 and subsequently packed.

7. Process according to claim 6,
characterised in that the raw vegetables are vacuum-packed after processing.

8. Process for preserving raw vegetable scraps,
characterised in that a mixture of calcium and magnesium is added to the raw vegetable scraps in a mixing ratio of 65 : 35 - 55 : 45 and that subsequently the raw vegetable scraps are treated with an aqueous solution according to one of claims 1, 4 or 5.

9. Process according to one of claims 6 - 8,
characterised in that the treatment lasts approx. 30 - 200 seconds.

10. Process according to claim 7,
characterised in that foil with a thickness of 100 - 130 µm (µ) and a permeability of 10 - 20 cm³/m² is used as packing material.

## Revendications

1. Solution aqueuse pour la conservation de légumes crus lavés et préparés mécaniquement, la dite solution contenant comme constituant hydrogènocarbonate de sodium et/ou carbonate de sodium, acide citrique et au moins un élément du groupe des métaux alcalins et alcalino-terreux, caractérisée en ce que l'hydrogènocarbonate de sodium et/ou le carbonate de sodium, l'acide citrique et l'élément du groupe des métaux alcalins et alcalino-terreux y sont présents dans un rapport de mélange de 3-5 : 1,5-2,5 : 0,5-1,5.

2. Solution aqueuse conforme à la revendication 1,
caractérisée en ce que la part des constituants représente 0,01 - 0,5 % du poids de la solution aqueuse.

3. Solution aqueuse conforme à la revendication 1 ou 2, caractérisée en ce que le ou les éléments du groupe des métaux alcalins et alcalino-terreux est (sont) le magnésium, le potassium et/ou le calcium.

4. Solution aqueuse conforme à la revendication 1, caractérisée en ce qu'elle contient également un mélange de calcium et de magnésium dans un rapport de mélange de 65 : 35 - 55 : 45.

5. Solution aqueuse conforme à la revendication 4, caractérisée en ce que la part des constituants hydrogènocarbonate de sodium et/ou carbonate de sodium, acide citrique et du ou des éléments du groupe des métaux alcalins et alcalino-terreux, représente 0,5 - 2,5 % du poids de la solution aqueuse.

6. Procédé de conservation de légumes crus lavés et préparés mécaniquement, caractérisé en ce que le légume cru est traité après le lavage avec une solution aqueuse conforme à l'une des revendications 1 - 3 et est emballé après le traitement.

7. Procédé conforme à la revendication 6, caractérisée en ce que le légume cru est emballé sous vide après le traitement.

8. Procédé de conservation de déchets de légumes crus, caractérisé en ce qu'un mélange de calcium et de magnésium dans un rapport de mélange de 65 : 35 - 55 : 45 est ajouté aux déchets de légume cru, et qu'ensuite les déchets de légume cru sont traités avec une solution aqueuse conforme à l'une des revendications 1, 4 ou 5.

9. Procédé conforme à l'une des revendications 6 - 8, caractérisé en ce que la durée du traitement est d'environ 30 - 200 secondes.

10. Procédé conforme à la revendication 7, caractérisé en ce qu'une feuille d'une épaisseur de 100-130 µm (µ) et d'une perméabilité de 10-20 cm²/m² est utilisée comme emballage.
